# EUROPÄISCHE PATENTSCHRIFT

(11) **EP 1 194 324 B1**
(45) Veröffentlichungstag und Bekanntmachung des Hinweises auf die Patenterteilung: **23.02.2005**
(21) Anmeldenummer: 01962554.0
(22) Anmeldetag: 11.07.2001
(51) Int. Cl.: B62B 3/14

(54) **STAPELBARER EINKAUFSWAGEN**
STACKABLE SHOPPING TROLLEY
CADDIE SUPERPOSABLE

(30) Priorität: 14.07.2000 DE 10034331; 18.01.2001 DE 10102118
(43) Veröffentlichungstag der Anmeldung: 10.04.2002
(73) Patentinhaber: WANZL METALLWARENFABRIK GMBH, D-89336 Leipheim (DE)
(72) Erfinder: THALHOFER, Armin, 89312 Günzburg (DE); RIESENEGGER, Markus, 89347 Bubesheim (DE); MAATZ, Bernhard, 86153 Augsburg (DE); GLOGGER, Carsten, 86381 Krumbach (DE); WANZL, Gottfried, 89340 Leipheim (DE)
(86) Internationale Anmeldenummer: PCT/DE2001/002607
(87) Internationale Veröffentlichungsnummer: WO 2002/006107

(56) Entgegenhaltungen:
- FR-A- 2 470 720
- GB-A- 2 316 368
- US-A- 4 097 056
- US-A- 5 203 579

## Beschreibung

Die Erfindung betrifft einen stapelbaren Einkaufswagen, mit einem Fahrgestell, mit einer Schiebeeinrichtung und mit einer in das Korbinnere verschwenkbaren Wand, durch welche die Rückseite des Korbes verschließbar ist, wobei am hinteren Ende des Fahrgestelles zwei nach oben gerichtete Träger angeordnet sind und der Korb an seiner Rückseite mit Stützmitteln ausgestattet ist, die mit den Trägern eine Steckverbindung bilden.

Zum Stand der Technik zählt ein Einkaufswagen, der in der US-Patentschrift 4,097,056 beschrieben ist. Dieser Einkaufswagen weist zwei aus Rohren gefertigte Träger auf, die an der Rückseite des Fahrgestelles angeordnet nach oben gerichtet sind. An der Rückseite des Korbes sind beidseitig Stützmittel vorgesehen, die als nach unten gerichtete Rohrabschnitte ausgebildet, nach unten über den Korbboden hinausgeführt sind und mit je einem Endabschnitt in je einen rohrförmigen Träger eintauchen, so dass hierdurch eine Steckverbindung zwischen dem Fahrgestell und dem Korb hergestellt ist.

Es ist Aufgabe der Erfindung, einen Einkaufswagen der hier vorliegenden Art so weiterzuentwickeln, dass bei einer Fertigung des Korbes aus Kunststoff eine sichere und wackelfreie Steckverbindung zwischen dem Fahrgestell und dem Korb herstellbar ist, wobei die aufzufindende Lösung eine stabile Anordnung der Schiebeeinrichtung am Einkaufswagen ermöglichen soll.

Die Lösung der Aufgabe besteht darin, dass die Stützmittel durch hohle Aufnahmen gebildet sind, in welche die Träger einsteckbar sind, wobei die Träger nach oben über die Aufnahmen hinaus weitergeführt und die über den Aufnahmen befindlichen Abschnitte der Träger zum Befestigen der Schiebeeinrichtung bestimmt sind.

Es erweist sich als äußerst zweckmäßig, die Träger nach oben über die Aufnahmen hinaus weiterzuführen. Dadurch können die Aufnahmen ausreichend groß oder auch paarweise im Abstand zueinander so gestaltet und angeordnet werden, dass eine wackelfreie und sichere Verbindung des Korbes mit dem Fahrgestell erzielbar ist. Darüberhinaus eignen sich die beiden über den Aufnahmen befindlichen freien Abschnitte der Träger hervorragend dazu, die Schiebeeinrichtung direkt an den aus Stahl gefertigten rohrförmigen Trägem auf einfache und ebenfalls sichere Weise zu befestigen.

Schließlich ist es gemäß einer Erweiterung der Erfindung möglich, auch die an der Rückseite des Korbes befindliche Wand an den über den Aufnahmen befindlichen Abschnitten der Träger verschwenkbar zu lagern, so dass auch die Wand, sollte diese zu einer Kindersitzeinrichtung weiterentwickelt sein, sicher und stabil am Einkaufswagen befestigbar ist.

Die Erfindung wird anhand von Ausführungsbeispielen näher erläutert. Es zeigt
- Fig. 1: einen Einkaufswagen komplett montiert;
- Fig. 2: den Aufsetzvorgang eines Korbes auf zwei Träger des Fahrgestelles;
- Fig. 3: die Art der Befestigung der Schiebeeinrichtung in Seitenansicht sowie
- Fig. 4: die Befestigung der Wand, welche die Rückseite des Korbes bildet.

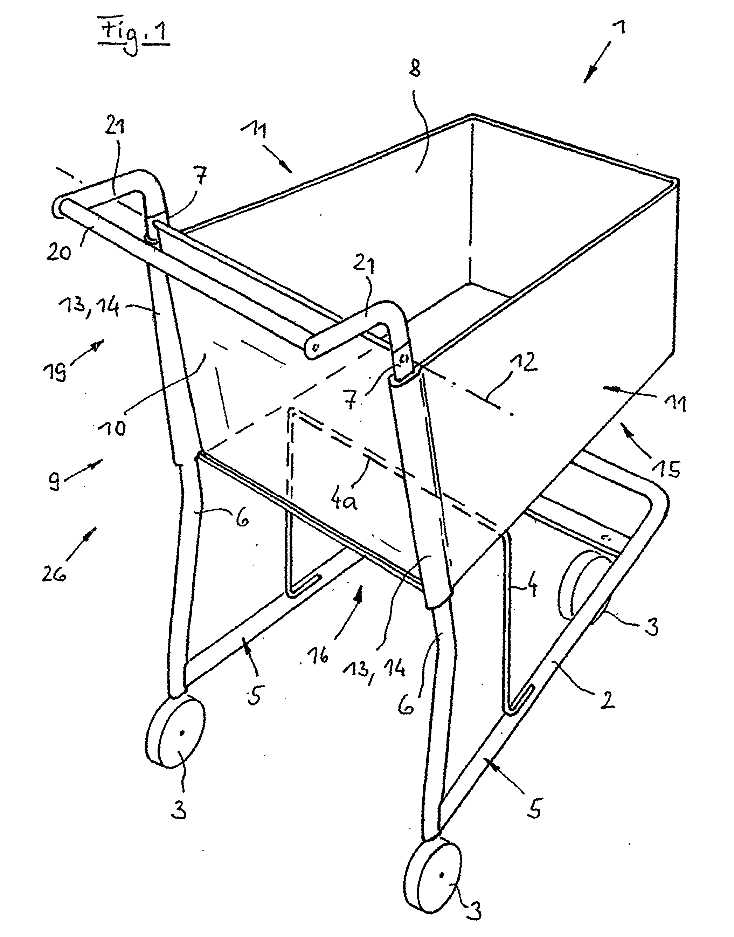

Der in Fig. 1 im wesentlichen schematisch dargestellte Einkaufswagen 1 weist ein bevorzugt aus Metall gefertigtes Fahrgestell 2 auf, das einen aus Kunststoff oder überwiegend aus Kunststoff hergestellten Korb 8 trägt. Der Einkaufswagen 1 ist mit einer Schiebeeinrichtung 19 ausgestattet, die sich an der Rückseite 26 des Einkaufswagens befindet. Die Rückseite 9 des Korbes 8 ist überwiegend durch eine Wand 10 gebildet, die sich in bekannter Weise um eine oben liegende horizontale Achse 12 in das Korbinnere und wieder zurück verschwenken lässt. Die Wand 10 kann in ebenfalls bekannter Weise zu einer faltbaren Kindersitzeinrichtung weiterentwickelt sein. Der Einkaufswagen 1 ist auch in bekannter Weise so gestaltet, dass dieser sich mit weiteren gleichen Einkaufswagen 1 in einer Reihe platzsparend stapeln lässt. Im Beispiel sind der Korb 8 und die Wand 10 als Kunststoffteile gestaltet. An der Rückseite 9 des Korbes 8 und an dessen beiden Längswänden 11 angeordnet befindet sich je eine als Stützmittel 13 vorgesehene hohle Aufnahme 14, in welche je ein nach oben gerichteter, dem Fahrgestell 2 angehörender Träger 6 eingefügt ist, so dass zwischen den Trägern 6 und den Stützmitteln 13 eine Steckverbindung gebildet ist. Die Träger 6 sind nach oben über die Aufnahmen 14 hinaus weitergeführt, so dass sich über den Aufnahmen 14 zwei Abschnitte 7 der Träger 6 befinden und die Abschnitte 7 die bereits erwähnte Schiebeeinrichtung 19 tragen, die durch eine Griffstange 20 und durch zwei Halteelemente 21 gebildet ist, welche die Griffstange 20 tragen und mit den Abschnitten 7 der Träger 6 ortsfest, jedoch lösbar verbunden ist. Die Träger 6 sind Teil des Fahrgestelles 2, das mit Fahrrollen 3 bestückt ist, wobei die Träger 6 und damit der Großteil des Fahrgestelles 2 aus Halbrundrohr gefertigt und der Querschnitt der Aufnahmen 14 dem Querschnitt der Träger 6 angepasst ist. Anstelle von Halbrundrohr kann auch gewöhnliches Rundrohr Verwendung finden. Es ist ratsam, den Korb 8 zusätzlich mit dessen Boden 15 auf einem Stützbügel 4 abzustützen, der beispielsweise die beiden Längsabschnitte 5 des Fahrgestelles 2 verbindet. Zu diesem Zweck sind an der Unterseite 16 des Bodens beispielsweise mit Hinterschneidungen ausgestattete, nicht näher dargestellte Arretiermittel angeformt, welche den horizontalen Abschnitt 4a des Stützbügels 4 klammerartig umfassen.

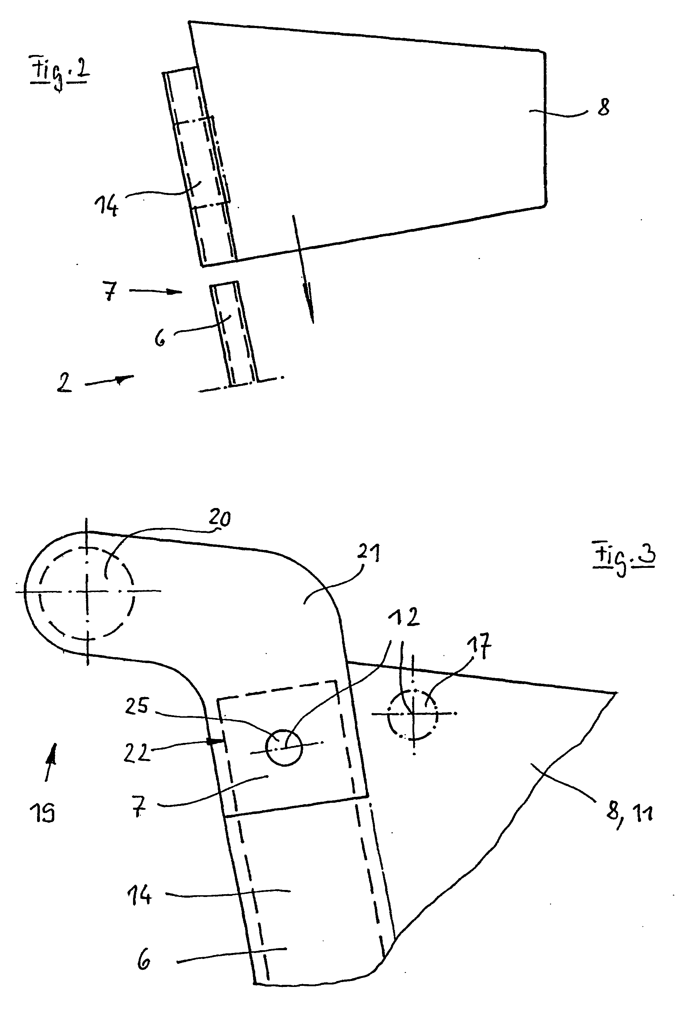

In einer Seitenansicht zeigt Fig. 2 wie der Korb 8 von oben her auf die beiden Träger 6 des Fahrgestelles 2 aufgesteckt wird. Der Pfeil zeigt die Aufsteckrichtung an. In der Zeichnung fehlt die Schiebeeinrichtung 19. Beim Aufsteckvorgang durchdringen die Träger 6 die Aufnahmen 14 so weit, dass sich in endgültig aufgesetztem Zustand des Korbes 8 die Abschnitte 7 der Träger 6 über den beiden Aufnahmen 14 befinden. Es ist durchaus möglich, anstelle von nur einer Aufnahme 14 beispielsweise zwei Aufnahmen 14 für jeden Träger 6 vorzusehen. In der Zeichnung ist eine derartige Ausbildung strichpunktiert gezeichnet angedeutet.

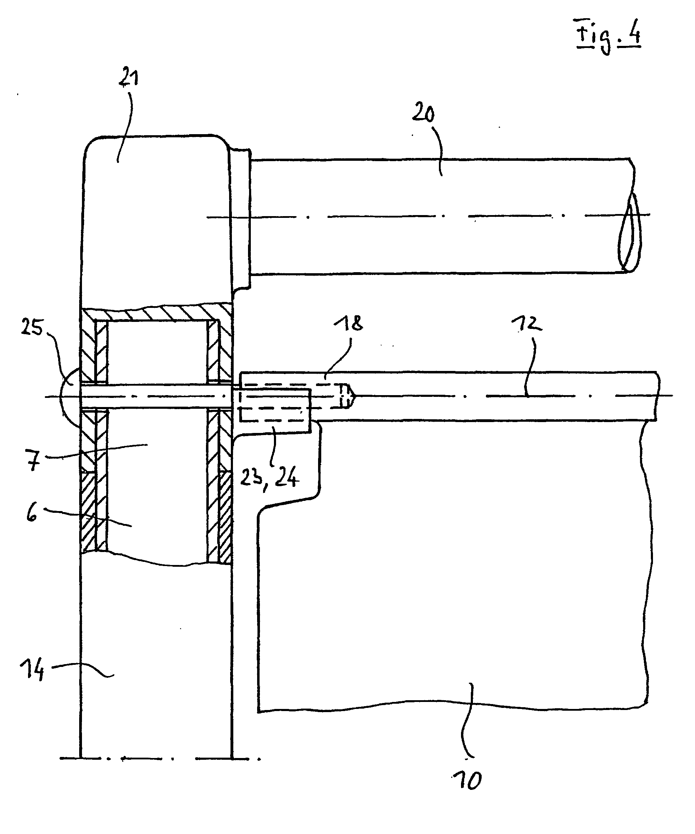

Fig. 3 zeigt ausschnittweise einen Teil einer Längswand 11 des Korbes 8 mit einem Teil eines Trägers 6 sowie ein Halteelement 21 der Schiebeeinrichtung 19 in Seitenansicht. Der Träger 6 ist über die Aufnahme 14 nach oben hinausgeführt und endet mit seinem Abschnitt 7 in einer Tasche 22, die sich am Halteelement 21 befindet und die nach unten offen ist. Die eben beschriebene Anordnung befindet sich jeweils an den beiden Längswänden 11 des Korbes 8. Die beiden Halteelemente 21, welche die Griffstange 20 tragen, sind somit von oben her auf die Abschnitte 7 der Träger 6 aufgesteckt und durch je ein Sicherungselement 25, welches jeweils ein Halteelement 21 sowie den entsprechenden Träger 6 zumindest teilweise durchdringt, gegen Lösen gesichert. Durch einen strichpunktiert gezeichneten Kreis ist in der Zeichnung angedeutet, dass an der Innenseite der Längswände 11 jeweils ein Lager 17 angeformt sein kann, die beide auf der horizontalen Achse 12 gelegen, zum Tragen der verschwenkbaren Wand 10 bestimmt sind.

Gemäß einer Erweiterung der Erfindung und im Schnitt dargestellt zeigt Fig. 4, dass es möglich ist, die für die Befestigung der Halteelemente 21 erforderlichen Sicherungselemente 25 auch zum Befestigen der schwenkbaren Wand 10 zu nutzen. Man erkennt in der Zeichnung einen Teil einer Aufnahme 14, einen Teil eines durch die Aufnahme 14 hindurchgeführten Trägers 6, dessen Abschnitt 7 in einem Halteelement 21 endet sowie einen Teil der von beiden Halteelementen 21 getragenen Griffstange 20. Auf der horizontalen Achse 12 ist ein das Halteelement 21 und ein den Träger 6 durchdringendes Sicherungselement 25 angeordnet, welches durch ein an der Innenseite des Halteelementes 21 befindliches Lagerteil 23 hindurchgeführt ist und in einen zylindrischen Tragabschnitt 18 eingeschraubt oder auf andere geeignete Weise gesichert ist, wobei der Tragabschnitt 18 Bestandteil der Wand 10 ist. Der Tragabschnitt 18 der Wand 10, und damit diese selbst, erstreckt sich zum gegenüberliegenden Halteelement 21 und ist im spiegelbildlich angeordneten Lagerteil 23 des gegenüberliegenden Halteelementes 21 ebenfalls um die horizontale Achse 12 schwenkbar gelagert und in gleicher Weise durch ein Sicherungselement 25 gegen Lösen gesichert. Anstelle von zwei Sicherungselementen 25 kann auch eine zylindrische Achse vorgesehen sein, die von einem Halteelement 21 ausgehend zum gegenüberliegenden Halteelement 21 führt und dabei die Halteelemente 21, die Träger 6, die Lagerteile 23 und den Tragabschnitt 18 der Wand 10 durchdringt. An den Enden der Achse befindliche Sicherungsmittel arretieren die Achse in der eben beschriebenen Lage. Es ist von Vorteil, die Lagerteile 23 als hohle zylindrische Vorsprünge zu gestalten, deren zylindrische Wandung 24 so weit längsgeschlitzt ist, dass die Wand 10 mittels des Tragabschnittes 18 von oben her schnappschlüssig in die Lagerteile 23 einsetzbar ist. Dies erleichtert die Montage der Wand 10 außerordentlich. Nach dem Anbringen des oder der Sicherungsmittel 25 in der vorab beschriebenen Weise kann sich die Wand 10 nicht mehr von den Lagerteilen 23 und damit von den Halteteilen 21 lösen, weil das wenigstens eine Sicherungselement 25 auch durch die Träger 6 hindurchgeführt ist.

## Patentansprüche

1. Stapelbarer Einkaufswagen (1), mit einem Fahrgestell (2), mit einem Korb (8), mit einer Schiebeeinrichtung (19) und mit einer in das Korbinnere verschwenkbaren Wand (10), durch welche die Rückseite (9) des Korbes (8) verschließbar ist, wobei am hinteren Ende des Fahrgestelles (2) zwei nach oben gerichtete Träger (6) angeordnet sind und der Korb (8) an seiner Rückseite (9) mit Stützmitteln (13) ausgestattet ist, die mit den Trägem (6) eine Steckverbindung bilden, **dadurch gekennzeichnet, dass** die Stützmittel (13) durch hohle Aufnahmen (14) gebildet und die Träger (6) nach oben über die Aufnahmen (14) hinaus weitergeführt sind und dass die über den Aufnahmen (14) befindlichen Abschnitte (7) der Träger (6) zum Befestigen der Schiebeeinrichtung (19) bestimmt sind.

2. Einkaufswagen nach Anspruch 1, **dadurch gekennzeichnet, dass** der Korb (8) von oben her auf die Träger (6) aufsteckbar ist.

3. Einkaufswagen nach Anspruch 1 oder 2, **dadurch gekennzeichnet, dass** die Aufnahmen (14) an der Rückseite (9) des Korbes (8) und an dessen Längswänden (11) angeordnet sind.

4. Einkaufswagen nach einem der Ansprüche 1 bis 3, **dadurch gekennzeichnet, dass** die Schiebeeinrichtung (19) zwei Halteelemente (21) aufweist, die mit den Abschnitten (7) der Träger (6) ortsfest, jedoch lösbar, verbunden sind.

5. Einkaufswagen nach einem der Ansprüche 1 bis 4, **dadurch gekennzeichnet, dass** der Korb (8) an der Unterseite (16) seines Bodens (15) mit Arretiermitteln ausgestattet ist, mit deren Hilfe der Korb (8) zusätzlich am Fahrgestell (2) abgestützt und mit diesem verbunden ist.

6. Einkaufswagen nach einem der Ansprüche 1 bis 4, **dadurch gekennzeichnet, dass** pro Träger (6) zwei Aufnahmen (14) vorgesehen sind.

7. Einkaufswagen nach einem der Ansprüche 1 bis 6, **dadurch gekennzeichnet, dass** die Abschnitte (7) der Träger (6) in je eine Tasche (22) eingefügt sind, die sich an jedem Halteelement (21) befindet.

8. Einkaufswagen nach einem der Ansprüche 1 bis 7, **dadurch gekennzeichnet, dass** die Wand (10) in je einem an einem Halteelement (21) befindlichen Lagerteil (23) schwenkbar gelagert ist.

9. Einkaufswagen nach einem der Ansprüche 1 bis 8, **dadurch gekennzeichnet, dass** die Wand (10) schnappschlüssig an den Halteelementen (21) einsetzbar ist.

10. Einkaufswagen nach einem der Ansprüche 1 bis 9, **dadurch gekennzeichnet, dass** die zum Befestigen der Schiebeeinrichtung (19) an den Abschnitten (7) bestimmten Sicherungsmittel (25) zusätzlich zum Sichern und Befestigen der Wand (10) vorgesehen sind.

## Claims

1. A nestable shopping trolley (1) comprising a wheel frame (2), a basket (8), a pushing means (19) and a wall (10) which is tiltable into the interior of the basket and by means of which the rear end (9) of the basket (8) is closable, wherein two upwardly extending supports (6) are arranged at the rear end of the wheel frame (2), and the basket (8) is provided at its rear end (9) with supporting means (13) which, together with the supports (6), form a plug-and-socket connection, **characterised in that** the supporting means (13) are formed by hollow mounts (14), and the supports (6) are extended upwards beyond the mounts (14), and **in that** the portions (7) of the supports (6) arranged above the mounts (14) are intended to fix the pushing means (19).

2. A shopping trolley according to claim 1, **characterised in that** the basket (8) can be placed onto the supports (6) from above.

3. A shopping trolley according to claim 1 or 2, **characterised in that** the mounts (14) are arranged at the rear end (9) of the basket (8) and on its longitudinal walls (11).

4. A shopping trolley according to any one of claims 1 to 3, **characterised in that** the pushing means (19) has two holding parts (21) which are fixedly, but detachably, connected to the portions (7) of the supports (6).

5. A shopping trolley according to any one of claims 1 to 4, **characterised in that** the basket (8) is provided on the underside (16) of its base (15) with retaining means, with the aid of which the basket (8) is additionally supported on the wheel frame (2) and connected thereto.

6. A shopping trolley according to any one of claims 1 to 4, **characterised in that** two mounts (14) are provided per support (6).

7. A shopping trolley according to any one of claims 1 to 6, **characterised in that** the portions (7) of the supports (6) are each inserted into a recess (22) provided in each holding part (21).

8. A shopping trolley according to any one of claims 1 to 7, **characterised in that** the wall (10) is tiltably mounted in a bearing part (23) provided on each holding part (21).

9. A shopping trolley according to any one of claims 1 to 8, **characterised in that** the wall (10) is insertable into the holding parts (21) in a snap-locking manner.

10. A shopping trolley according to any one of claims 1 to 9, **characterised in that** the securing means (25) intended to fix the pushing means (19) to the portions (7) are additionally provided for securing and fixing the wall (10).

## Revendications

1. Chariot à provisions emboîtable (1), avec un châssis (2), avec un panier (8), avec un dispositif de poussée (19) et avec une paroi (10) pouvant pivoter à l'intérieur du panier et permettant de fermer le côté arrière (9) du panier (8), deux éléments porteurs (6) dirigés vers le haut étant disposés à l'extrémité arrière du châssis (2) et le panier (8) étant équipé sur son côté arrière (9) de moyens de soutien (13) qui forment un assemblage par emboîtement avec les éléments porteurs (6), **caractérisé en ce que** les moyens de soutien (13) sont formés par des éléments récepteurs creux (14) et les éléments porteurs (6) sont prolongés vers le haut au-delà des éléments récepteurs (14), et **en ce que** les parties (7) des éléments porteurs (6) qui se trouvent au-dessus des éléments récepteurs (14) sont destinées à la fixation du dispositif de poussée (19).

2. Chariot à provisions selon la revendication 1, **caractérisé en ce que** le panier (8) peut être emboîté par le dessus sur les éléments porteurs (6).

3. Chariot à provisions selon la revendication 1 ou 2, **caractérisé en ce que** les éléments récepteurs (14) sont disposés sur le côté arrière (9) du panier (8) et sur ses parois longitudinales (11).

4. Chariot à provisions selon l'une des revendications 1 à 3, **caractérisé en ce que** le dispositif de poussée (19) présente deux éléments de maintien (21) qui sont assemblés de manière fixe mais amovible aux parties (7) des éléments porteurs (6).

5. Chariot à provisions selon l'une des revendications 1 à 4, **caractérisé en ce que** le panier (8) est équipé sur le dessous (16) de son fond (15) de moyens de blocage à l'aide desquels le panier (8) est en outre soutenu sur le châssis (2) et assemblé à ce dernier.

6. Chariot à provisions selon l'une des revendications 1 à 4, **caractérisé en ce qu'**il est prévu deux éléments récepteurs (14) par élément porteur (6).

7. Chariot à provisions selon l'une des revendications 1 à 6, **caractérisé en ce que** les parties (7) des éléments porteurs (6) sont insérées chacune dans une poche (22) qui se trouve sur chaque élément de maintien (21).

8. Chariot à provisions selon l'une des revendications 1 à 7, **caractérisé en ce que** la paroi (10) est montée à pivotement dans une partie formant palier (23) respective qui se trouve sur un élément de maintien (21).

9. Chariot à provisions selon l'une des revendications 1 à 8, **caractérisé en ce que** la paroi (10) peut être installée par enclenchement sur les éléments de maintien (21).

10. Chariot à provisions selon l'une des revendications 1 à 9, **caractérisé en ce que** les moyens d'assujettissement (25) destinés à la fixation du dispositif de poussée (19) sur les parties (7) sont en outre prévus pour assujettir et fixer la paroi (10).
